# FASCICULE DE BREVET EUROPEEN

(11) **EP 0 533 545 B1**
(45) Date de publication et mention de la délivrance du brevet: **04.12.1996**
(21) Numéro de dépôt: 92402509.1
(22) Date de dépôt: 14.09.1992
(51) Int. Cl.: H04B 7/26

(54) **Station de base pour système de communication à accès multiple par répartition dans le temps**
Basisstation für ein Übertragungssystem mit Mehrfachzugriff in Zeitmultiplex
Base station for time division multiple access communication system

(30) Priorité: 17.09.1991 FR 9111434
(43) Date de publication de la demande: 24.03.1993
(73) Titulaire: MATRA COMMUNICATION, F-29562 Quimper Cédex 9 (FR)
(72) Inventeur: Billon, Thierry, F-92800 Puteaux (FR)
(74) Mandataire: Fort, Jacques

(56) Documents cités:
- EP-A- 0 333 679
- US-A- 4 301 533
- IEEE GLOBAL TELECOMMUNICATIONS CONFERENCE & EXHIBITION, San Diego, California, 2-5 décembre 1990, vol. 1, pages 490-494, IEEE, New York, US; R. D'AVELLA et al.: "Evaluation of diversity schemes in TDMA digital mobile radio"

## Description

L'invention concerne les installations de radio-communication comportant au moins une station de base du type ayant plusieurs émetteurs, dont certains au moins sont associés chacun à un bloc de gestion de trames applicant des données provenant de sources différentes à des canaux de transmission auxquels sont affectés des créneaux temporels homologues de trames successives pour réaliser un multiplexage à répartition dans le temps ou AMRT, les fréquences d'émission étant, à un instant donné, différentes pour les différentes sources.

Dans une telle installation, une station de base ayant N émetteurs chacun affecté à un multiplex d'ordre P, la capacité de liaison est de N x P communications. Un émetteur en service est affecté en permanence à chaque multiplex.

L'invention trouve une application particulièrement importante dans les installations de liaison avec des mobiles, dans lesquelles les conditions de réception varient largement en fonction de l'emplacement des mobiles, soit du fait de leur éloignement variable, soit du fait de leur position variable par rapport à des obstacles donnant naissance à des interférences et à des phénomènes d'évanouissement.

La solution utilisée jusqu'à ce jour pour améliorer la réception des mobiles consiste à augmenter la puissance d'émission des émetteurs de la base ou à augmenter le nombre des émetteurs affectés à la communication ou aux communications en cause. La seconde solution permet en particulier de créer une diversité spatiale d'émission et de combattre les phénomènes d'évanouissement dus aux trajets multiples en affectant, à chaque émetteur, une antenne décorrélée spatialement des autres antennes d'émission de messages en provenance de la même source.

On connaît par ailleurs (US-A-4301533) une station de radio-communication ayant plusieurs émetteurs ; pour compenser une atténuation sur certains faisceaux, une puissance supplémentaire est fournie en permanence sur ces faisceaux en regroupant plusieurs émetteurs.

Le document EP-A-0333679 divulgue l'emploi de canaux inutilisés pour améliorer la communication entre des stations de base et des stations mobiles d'une installation de radio-communication.

L'invention vise notamment à fournir une installation permettant d'augmenter la puissance moyenne d'émission à partir d'au moins une source sans pour autant nécessiter d'ajouter d'émetteur à la station centrale ni d'en augmenter la puissance.

Elle utilise pour cela le fait que, statistiquement ou par construction, un émetteur (ou plus) parmi les émetteurs d'une station de base est disponible pendant au moins une fraction importante du temps. Cette disponibilité résulte de diverses causes :
- le nombre de communications à transmettre est souvent inférieur au nombre de canaux disponibles (loi d'Erlang) ;
- beaucoup d'installations de communication en phonie utilisent une émission discontinue, c'est-à-dire une émission qui cesse en l'absence d'activité vocale ;
- les stations de base ont souvent un (voire plusieurs) émetteur(s) redondant(s), destiné(s) à pallier le risque de panne d'un émetteur et inutilisés dans une installation classique aussi longtemps que les autres émetteurs fonctionnent correctement.

L'invention propose en conséquence une station comportant des moyens affectant les créneaux temporels inutilisés à l'augmentation (généralement au doublement) de la puissance émise pour transmettre les données provenant d'une source qui est active. Cette source peut être sélectionnée de façon aléatoire parmi les sources actives. Elle peut également être choisie pour correspondre à la station mobile la plus éloignée. Elle peut encore être déterminée par un algorithme mémorisé dans la station de base.

En d'autres termes, la station de base comporte des moyens pour affecter au moins certains des créneaux temporels de la trame d'accès multiple émise par un émetteur déterminé, non nécessaires pour la communication à partir d'une source déterminée, à l'émission à partir d'une autre source alimentant un autre émetteur, à la même fréquence de porteuse que celle de l'émetteur affecté à ladite autre source.

On voit qu'on ne modifie en rien les aspects de la transmission à accès multiple à répartition dans le temps, dite AMRT ou TDMA. Chaque communication à partir d'une source reste définie entièrement par :
- la position dans le temps des créneaux ou tranches temporels affectés à la communication ;
- la fréquence de porteuse des informations, cette fréquence pouvant différer d'un créneau temporel aux créneaux temporels des trames suivantes, pour la même communication, comme cela est le cas dans les installations dites à saut de fréquence, prévues pour donner à tous les utilisateurs des qualités comparables de communication.

La mise en oeuvre de l'invention nécessite simplement que les émetteurs soient synchronisés pour que les créneaux des différents canaux soient en coïncidence temporelle et que les émetteurs- soient doués d'une agilité de fréquence et couplés à ou aux antennes en mode large bande qui présente un grand nombre d'avantages dans les installations à saut de fréquence.

Le gain que l'on peut obtenir par mise en oeuvre de l'invention apparaît immédiatement à l'examen d'exemples représentatifs, en prenant les hypothèses réalistes suivantes :
- le taux d'occupation d'un canal aux heures de charge est d'environ 70 %, soit 0,7 Erlang,
- le taux d'activité vocale est d'environ 50 %.

En conséquence, le taux d'activité d'un canal, lorsqu'il est affecté à une source et à une seule, est d'environ un tiers seulement.

Dans le cas d'une station de base à quatre émetteurs associés à des blocs de gestion de trame organisant un multiplex à quatre trames, destiné à des communications vocales avec émission discontinue, la probabilité pour que quatre créneaux temporels soient simultanément actifs, (ce qui interdit l'émission par association au moins de deux émetteurs à une seule source) est de 1/81 seulement. Dans la majeure partie des cas, il sera donc possible d'associer deux émetteurs à la même source, ce qui permet d'autant plus d'améliorer la réception que les données sont généralement transmises avec des codes de correction d'erreur permettant d'améliorer la restitution en cas d'erreur localisée.

Pour une station de base avec sept trames AMRT et huit émetteurs dont un est redondant, le pourcentage de créneaux actifs susceptibles d'être émis avec duplication d'émetteurs devient égal à 95 % : la quasi-totalité des émissions peut s'effectuer avec une puissance au moins doublée par rapport à celle que l'on rencontre dans une station de base traditionnelle.

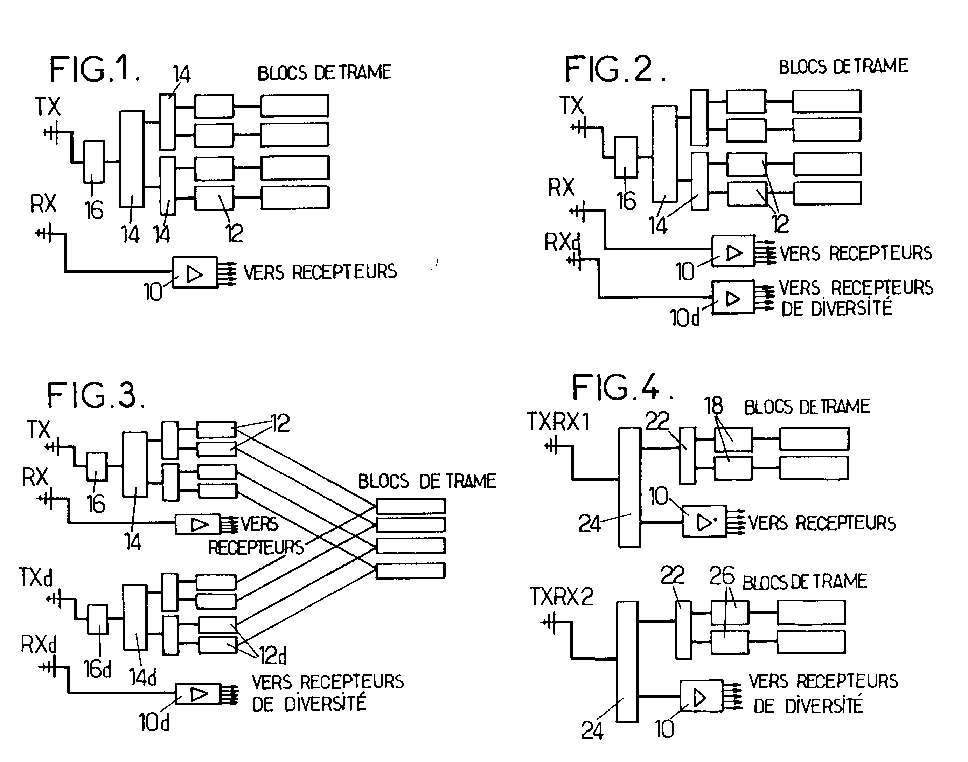

En effet, l'association de N émetteurs à la même source permet :
- soit, dans une architecture classique (telle que présentée en figure 1), où tous les émetteurs 12 sont couplés à la même antenne d'émission TX par un coupleur large bande 14 et un filtre 16, d'augmenter la puissance du signal émis d'un facteur 10 LOG N (exprimé en dB), les N signaux étant sommés en phase à l'accès d'antenne ;
- soit, dans une architecture où l'on a scindé les émetteurs en N groupes, chacun des groupes étant couplé sur sa propre antenne (spatialement décorrélée des autres antennes) de réaliser une diversité d'espace en émission d'ordre N.

La meilleure efficacité du procédé est obtenue avec N = 2.

Dans le premier cas, avec N = 2, le gain est de 3 dB soit un doublement de la puissance émise.

Dans le second, avec N = 2, le gain est celui de la diversité, d'au moins 5 dB ; il est dû pour partie à l'augmentation de la puissance émise, pour partie à la décorrélation entre antennes.

Suivant un autre aspect de l'inventin, la station de base ayant plusieurs émetteurs et un ou plusieurs blocs de gestion de trame appliquant des données provenant de sources différentes à des canaux de transmission auxquels sont affectés des créneaux temporels homologues de trames successives pour réaliser un multiplexage à répartition dans le temps, les fréquences d'émission étant, à un instant donné, différentes pour les différentes sources, est caractérisée en ce qu'elle comporte des moyens (32₁, 32₂,...) pour affecter au moins certains des créneaux temporels émis par un émetteur déterminé (TX1, TX2, TX3, TX4) non nécessaires pour la communication à partir d'une source déterminée qui lui serait affectée si elle était active, à l'émission à partir d'une source qui alimente également un autre émetteur, à la même fréquence de porteuse que celle du dit autre émetteur.

L'invention vise également à fournir une architecture de couplage d'émetteurs dans une station de base du type ci-dessus défini, permettant d'augmenter notablement les puissances maximales d'émission disponibles à l'antenne, à puissance d'émetteur donnée. Cette architecture est avantageusement utilisable en liaison avec les dispositions qui viennent d'être décrites car eles se cumulent, bien qu'elle présente également un intérêt lorsqu'on l'utilise indépendamment.

Pour faire apparaître les avantages apportés par l'invention, il peut être utile de rappeler tout d'abord les architectures traditionnelles de couplage des antennes dans les stations de base d'installations de radiocommunication. Une architecture type est représentée schématiquement en figure 1 dans le cas d'une station classique prévue pour transmettre simultanément N = 4 communications (ce qui permet d'assurer N x P liaisons simultanées dans le cas d'un multiplexage d'ordre P).

Elle est constituée, en ce qui concerne les couplages d'émetteurs à l'antenne d'émission TX, de coupleurs large bande de type hybride 14. Ce type de coupleur présente un grand nombre d'avantages, sur des coupleurs sélectifs, plus particulièrement les coupleurs à cavité.

En effet, les coupleurs de type hybride permettent un espacement de fréquence entre canaux aussi faible que souhaité, en conservant l'isolation nécessaire entre les différents émetteurs (ce qui permet une sommation en phase de signaux identiques à même fréquence), telle que mentionnée précédement.

Puisque ces coupleurs sont à large bande, tout émetteur 12 peut fonctionner sur un jeu de fréquences quelconque et changer de fréquence au rythme souhaité, ce qui présente un avantage essentiel dans le cas d'installation à saut de fréquence, comparé à une installation utilisant des cavités, où un émetteur est contraint de n'utiliser que la fréquence de sa cavité, qu'il est impossible, dans l'état de l'art actuel, de modifier à un rythme compatible d'une part avec les contraintes d'isolation entre différents émetteurs, d'autre part avec le saut de fréquence : une installation qui nécessite de "sauter" sur dix fréquences, et qui n'aurait qu'une trame AMRT nécessite dix émetteurs et dix cavités en mode couplage cavité, mais un seul émetteur en mode hybride. En fait, il faut un émetteur par fréquence en mode cavité, et un émetteur par trame AMRT en mode hybride.

En contrepartie, ces coupleurs présentent des pertes d'insertion élevées, se traduisant par une atténuation d'environ 3 dB par étage, soit 6 dB dans le cas de la figure 1, sans tenir compte de l'atténuation (de l'ordre de 1 dB), apporté par le filtre de bande de sortie 16, dont le but est de protéger la bande de réception de la station des signaux d'intermodulation et de bruit que pourrait créer les émetteurs 12 dans cette bande.

Toujours dans une station classique, mais avec diversité d'espace en réception uniquement, (pour améliorer la qualité de réception des communications à partir des mobiles, à puissance d'émission par les mobiles donnés), il convient d'ajouter à l'architecture de la figure 1, qui comporte une antenne de réception unique RX alimentant des récepteurs par l'intermédiaire d'un amplificateur large bande 10, une seconde antenne RXd, découplée spatialement de l'antenne RX et attaquant un amplificateur relié à des récepteurs de diversité (distincts de ceux reliés à l'antenne RX). Cette disposition est représentée en figure 2, où les composants correspondant à ceux de la figure 1 portent le même numéro de référence.

Il s'en suit que trois antennes sont nécessaires.

Pour implémenter, dans une station classique, à la fois une diversité de réception et une diversité d'émission d'ordre 2, il est nécessaire d'ajouter à la figure 2, une antenne TXd (découplée spatialement de l'antenne TX) à laquelle sont couplés un nombre d'émetteurs 12d identique au nombre d'émetteurs 12 utilisés sur l'antenne TX. Comme le montre la figure 3, quatre antennes sont nécessaires, et le nombre d'émetteurs et de coupleurs associés est doublé.

L'architecture montrée dans les figures 2 et 3 présente de nombreux inconvénients.

Elle exige un grand nombre d'antennes (3 et 4 respectivement), donc augmente les investissements consacrés aux antennes, aux lignes d'alimentation et aux protections ; le regroupement des antennes dans un espace forcément limité se traduit par des phénomènes d'intermodulation et maint probléme d'ingénierie.

L'atténuation de couplage est importante (plus de 6 dB dans les figures 1, 2 et 3).

L'invention, dans son second aspect, vise notamment à réduire le nombre des antennes nécessaire à une émission et/ou à une réception en diversité d'espace et, dans certains cas, à réduire l'atténuation qui est le seul inconvénient du couplage hybride, comme mentionné précédemment.

Elle utilise pour cela le fait que les antennes de réception sont généralement identiques aux antennes d'émission (gain et bande passante très comparables).

L'invention propose en conséquence une station de base dans laquelle certains au moins des émetteurs sont couplés, par l'intermédiaire d'un duplexeur, à au moins une antenne d'alimentation de récepteurs.

Le duplexeur joue le rôle de filtre de bande d'émission et de réception. Il permet de supprimer le présélecteur classiquement utilisé dans le multicoupleur de réception et donc n'affecte pas le facteur de bruit de la voie de réception ; il permet de supprimer le filtre de bande émission et donc n'affecte pas la puissance d'émission puisque l'atténuation qu'il apporte est comparable à celle du filtre que l'on supprime.

En particulier, une station de base à quatre émetteurs permettant la réception en diversité peut être réalisée avec seulement deux antennes au lieu de trois antennes dans le cas d'une station de base classique à réception en diversité spatiale en affectant deux des émetteurs à l'une des antennes et les deux autres émetteurs à l'autre antenne, chacune des antennes attaquant des récepteurs correspondant à toutes les voies de réception, afin d'assurer une réception en diversité. Cette disposition permet de supprimer un des coupleurs qui, lorsqu'il est constitué par un étage hybride de type habituel, crée un affaiblissement de l'ordre de 3 dB.

On voit que cette disposition présente, en plus de son intérêt en ce qui concerne le nombre d'antennes, l'avantage d'un gain important sur les puissances émises.

La disposition définie ci-dessus dans le cas de quatre émetteurs peut être extrapolée à un nombre accru d'émetteurs. Elle présente un intérêt particulier dans le cas d'un nombre d'émetteurs égal à une puissance de 2. Toutefois, elle est également utilisable avec un nombre d'émetteurs différent. En particulier, la disposition est utlisable avec r+s émetteurs répartis en deux groupes, r étant différent de s.

Lorsque l'on recherche à la fois une diversité d'espace à l'émission et à la réception et une réduction du nombre des antennes, on peut adopter une architecture qui est constituée par la duplication d'un ensemble comportant : un nombre d'émetteurs égal à celui des communications simultanées ; un jeu de coupleurs et un duplexeur d'orientation de la puissance émise vers l'antenne et de la puissance reçue vers les récepteurs.

Dans ce cas, le gain offert, sur la puissance émise, par la disposition précédente, est perdu par le fait que le nombre d'émetteur a été doublé pour réaliser une diversité d'émission ; en revanche la diversité d'émission est obtenue avec deux antennes seulement, au lieu de quatre dans le cas de la figure 3.

On note cependant que, par l'application du premier aspect de l'invention, qui permet de réaliser une diversité d'espace en émission sans doubler le nombre d'émetteurs (par l'utilisation des instants d'inactivité de certains émetteurs), le gain offert par la disposition précédente est conservée.

Il s'en suit qu'en termes de matériel, on peut utiliser un montage à deux antennes seulement, au lieu des quatre antennes de la figure 3 si l'on applique les deux aspect de l'invention à la fois.

On gagne ainsi quatre émetteurs et deux antennes. Si l'on comptabilise les gains (en comparant la disposition de la figure 3, qui n'utilise aucun des aspects de l'invention, et une disposition utilisant les deux aspects de l'invention), on obtient un gain de 3 dB (du fait de la suppression d'un coupleur), en conservant les possibilité d'émission en diversité, tout en ayant supprimé une bonne partie du matériel.

L'invention sera mieux comprise à la lecture de la description qui suit de modes particuliers de réalisation de l'invention, donnés à titre d'exemples non limitatifs. La description se réfère aux dessins qui l'accompagnent, dans lesquels :
- les figures 1 et 2, déjà mentionnées, correspondent à des architectures classiques ;
- la figure 3, déjà mentionnée, décrit une disposition classiquement utilisée pour réaliser une diversité d'espace en émission et en réception, dans une station de base d'une installation de radio-communication ;
- la figure 4, similaire à la figure 1, montre une station de base à quatre émetteurs et réception en diversité, ne comportant que deux antennes, conforme à un mode particulier de réalisation de l'invention et autorisant une diversité d'émission par l'application du premier aspect de l'invention ;
- la figure 5, similaire à la figure 1, montre une architecture de station de base à quatre émetteurs et deux antennes, autorisant l'émission et la réception en diversité d'espaces ;
- la figure 6 est un schéma montrant (à titre d'exemple applicable au GSM) une répartition possible des créneaux d'émission provenant de N = 4 équipements gestionnaires de trames, chaque trame comportant P = 8 créneaux, destinée à faire apparaître la possibilité d'un accroissement de puissance de transmission ;
- la figure 7 montre un schéma de mise en oeuvre avec deux émetteurs seulement.

Comme on l'a déjà mentionné plus haut, une diversité d'espace en réception peut être réalisée, avec simultanément diminution de l'affaiblissement, par affectation des mêmes antennes à l'émission et à la réception, en plaçant un duplexeur sur chacune de deux antennes. Dans le cas illustré sur la figure 4, deux des émetteurs 18 parmi les N = 4 émetteurs attaquent une première antenne TX RX1 par l'intermédiaire d'un isolateur (non représenté), d'un coupleur large bande 22 et d'un duplexeur 24. Le duplexeur 24 alimente de son côté un amplificateur 10 qui attaque l'ensemble des N = 4 récepteurs.

Cette architecture donne un gain de 3 dB par rapport à celles montrées en figure 1, 2 ou 3 à l'émission. Par exemple, pour des émetteurs de 25 W, la puissance appliquée à l'antenne est de 10 W, au lieu de 5 dans le cas de la figure 1, 2 ou 3.

Un montage identique au précédent permet de coupler, à une seconde antenne TX RX2, décorrélée spatialement de la première antenne, les deux émetteurs restants 26 et l'ensemble des N = 4 récepteurs de diversité qui constituent des duplications de ceux affectés à l'antenne TX RX1.

Les coupleurs large bande 22 et les duplexeurs 24 permettent le fonctionnement en saut de fréquence qui est celui prévu pour le système pan européen GSM.

Les coupleurs peuvent être passifs ou actifs. Dans le second cas, ils comportent un amplificateur à large bande qui doit être linéaire dans toute la bande spectrale de fonctionnement, ce qui exige une puissance nominale nettement supérieure à la puissance effective à fournir. Lorsque l'on admet de conserver la même puissance d'émission qu'en cas d'absence de diversité, la mise en oeuvre de l'invention permet de réduire notablement la puissance nominale et donc que le coût et la consommation des amplificateurs des coupleurs.

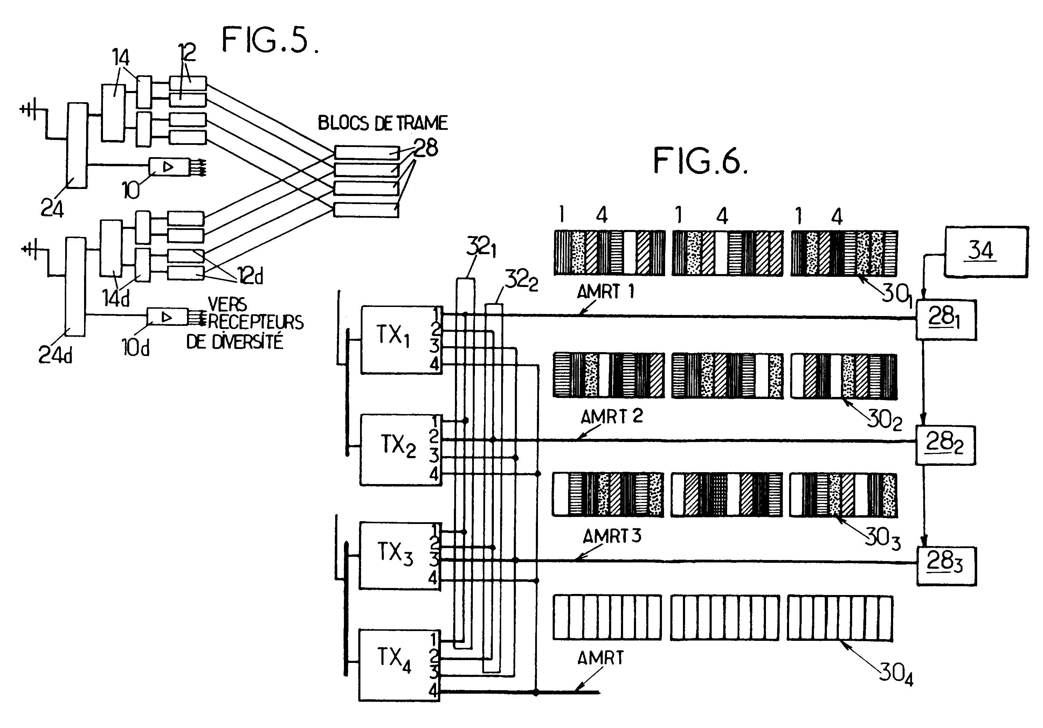

L'architecture montrée en figure 5 se différencie de la précédente en ce que, pour assurer la diversité d'espace en émission et en réception, chaque antenne est reliée à un jeu complet de N émetteurs et un jeu complet de N récepteurs. L'antenne RX TX est reliée à tous les émetteurs 12 par une architecture similaire à celle de la figure 1, si ce n'est qu'un duplexeur 24 est interposé entre le coupleur large bande 14 et l'antenne. L'amplificateur 10 est lui-même séparé de l'antenne par le duplexeur. L'antenne de diversité spatiale RXd TXd est reliée aux émetteurs de diversité 12d et aux récepteurs de diversité de la même façon que l'antenne RX TX.

L'architecture montrée en figure 4 ou 5 peut être extrapolée à un nombre d'émetteurs et de récepteurs différents de 4. En particulier, l'architecture de la figure 4 peut être extrapolée à un nombre d'émetteurs supérieur à 4, un nombre égal d'émetteurs étant avantageusement affectés à chaque antenne, par l'intermédiaire de coupleurs en cascade. Les antennes alimentent chacune un nombre de récepteurs égal au nombre de blocs de gestion de trame 28 lorsque la diversité d'espace en réception est souhaitée pour toutes les communications.

Lorsque, dans le mode de réalisation de la figure 5, le nombre d'émetteurs n'est pas une puissance de 2, plusieurs montages sont possibles. Ou bien on laisse inutilisées certaines entrées de coupleurs. Ou bien on prévoit une puissance plus faible pour l'émetteur ou les émetteurs dont le signal de sortie a un nombre moindre de coupleurs à traverser.

On décrira maintenant la constitution générale et le procédé mis en oeuvre dans une station de base dans une installation de radiotéléphonie à accès multiple à répartition dans le temps, du genre prévu par le système GSM (Global System for Mobiles).

La figure 6 montre schématiquement 4 émetteurs synthétisés TX1, TX2, TX3 et TX4, pouvant être regroupés comme dans le cas de la figure 4, chacun prévu pour émettre, en radio fréquence, des signaux sous forme de données numériques provenant d'un équipement gestionnaire de trame AMRT. Dans cette figure, une couleur (grisée) correspond à une fréquence, un blanc à un instant d'inactivité. Une même communication utilise toujours les créneaux de même rang. On voit que, à un instant donné, aucun des quatre créneaux simultanés issus des quatre bloc de trame n'utilise la même fréquence. Dans le cas illustré, la station ne comporte que 3 équipements gestionnaires de trame 28₁, 28₂, 28₃, de façon qu'un émetteur soit toujours disponible en secours.

La figure 6 montre encore une constitution possible de trois trames successives provenant des blocs de gestion 28₁, 28₂ et 28₃, synchronisés de façon que les huit créneaux temporels de chaque trame, indiqués par des rectangles, soient en coïncidence temporelle avec les créneaux des trames provenant des autres blocs de gestion. Les rectangles blancs correspondent à des créneaux temporels où il n'y a rien à émettre.

Dans une station de base classique, chaque bloc de gestion de trame est affectée à un émetteur déterminé, comme cela est indiqué en traits épais sur la figure 6. Pour permettre d'émettre les signaux provenant d'une source déterminée sur plusieurs émetteurs à la fois, la station de base est complètée par des moyens 32₁ , 32₂, etc.. permettant, dans un mode avantageux de réalisation, d'orienter n'importe quel créneau vers n'importe quel émetteur. Les émetteurs sont prévus de façon à présenter une agilité en fréquence et sont associés à des moyens permettant de faire passer la fréquence d'émission de l'un quelconque des émetteurs à celle déjà affectée à un autre émetteur.

Dans le cas particulier illustré sur la figure 6, l'émetteur TX4 est redondant. Toutes les trames représentées en 30₄ sont vides. Cet émetteur TX4 peut être utilisé pour émettre toutes les trames AMRT provenant d'un autre bloc gestionnaire, par exemple 28₁ ou 28₂, dont l'émetteur "naturel" est respectivement TX1 ou TX2. Cette opération peut s'effectuer par simple configuration de l'émetteur TX4 pour qu'il fonctionne en synchronisme et aux mêmes fréquences que l'émetteur TX1 ; pour certains algorithmes de démodulation, un décalage temporel faible devant la durée d'un créneau, permet d'améliorer l'efficacité de la diversité d'émission. En particulier un décalage temporel entre les émissions en diversité de l'ordre de 1 temps bit donne de bons résultats lorsque l'algorithme de démodulation dans le récepteur est prévu pour faire une recherche de la fenêtre temporelle optimale d'échantillonnage.

Si un des émetteurs TX1, TX2 et TX3 tombe en panne, l'émetteur redondant TX4 est simplement reconfiguré.

Dans le cas d'une architecture du genre montre en figure 4, cette utilisation de l'émetteur redondant TX4 non seulement augmente la puissance émise, mais encore fournit une diversité d'espace en émission.

L'allocateur de canaux de la station de base peut être prévu pour réserver, chaque fois que cela est nécessaire pour assurer une communication satisfaisante avec un récepteur, notamment du fait de l'éloignement de ce récepteur, un créneau temporel d'ordre donné, qui constitue le support de la communication, (par exemple le créneau 1 provenant du bloc 28₁ dans le cas illustré) et interdire simultanément, sur les trames provenant d'un autre bloc (bloc 28₃ dans le cas de la figure 6) l'allocation du créneau correspondant. On peut ainsi utiliser l'émetteur TX3 pour l'émission en diversité du premier créneau temporel de chaque trame provenant du bloc de gestion de trame 28₁. Il suffit d'aiguiller les signaux à émettre sur le créneau 1 provenant du bloc 28₁ vers les deux émetteurs TX1 et TX3 et de faire émettre TX3 à la même fréquence que TX1. Dans le cas illustré où tout émetteur est connecté par des moyens 32₁, 32₂.... à tous les blocs de gestion de trame, la mise en oeuvre du procédé est particulièrement simple.

L'amélioration de la liaison par doublement de la puissance et/ou par diversité d'espace à l'émission peut être généralisée en tenant compte de ce que :
- le nombre de communications à maintenir à un instant donné est inférieur, pendant la majeure partie du temps, à la capacité maximale,
- lorsque plusieurs communications de phonie ont lieu simultanément, les instants de silence de ces communications sont décorrélés et correspondent à une absence d'émission si les émetteurs sont prévus pour des émissions discontinues, établies uniquement pendant les périodes d'activité vocale.

Statistiquement, il est en conséquence possible d'effectuer des émissions avec doublement de la puissance (et/ou éventuellement diversité d'espace) pour certaines communications par l'utilisation des créneaux temporels inactifs soit par l'absence de trafic, soit par le caractère discontinu de l'émission.

Pour cela l'allocateur de canaux 34 donne, soit au(x) bloc(s) de trame(s), soit aux moyens de commutation 32, soit aux deux, suivant les modes de connexion, l'indication que telle ou telle communication doit être renforcée (doublée ou émise en diversité). Cette indication permet aux moyens de commutation 32 d'aiguiller, à tout instant (créneau), les signaux à émettre vers deux émetteurs, les moyens de commutation 32 ayant les algorithmes ou moyens nécessaires pour détecter :
- que tel ou tel créneau est inactif, donc disponible ;
- que tel ou tel créneau inactif est réservé au renforcement d'une communication particulière ;
- que tel ou tel créneau actif doit être renforcé.

Le changement de fréquence porteuse s'effectue sans aucune difficulté dans le cas d'une station de base prévue pour que la fréquence porteuse de chaque émetteur puisse différer d'un créneau temporel à l'autre, pour une même communication. Ce cas est notamment celui du système cellulaire numérique européen à 900 MHz dit GSM (Global System for Mobiles ou Groupe Spécial Mobiles).

L'affectation de créneaux est avantageusement effectuée par un algorithme évitant que plus d'un canal supplémentaire soit affecté à une émission en diversité. De nombreux algorithmes simples permettent d'arriver à ce résultat. En particulier, lorsque les moyens 32₁, 32₂... sont répartis dans les émetteurs, ou lorsque tous les émetteurs reçoivent tous les signaux issus de tous les blocs de trames (comme le montre la figure 6), l'algorithme peut être le suivant :
- si un émetteur i constate que, sur son entrée associée i, une indication que l'entrée j doit être renforcée, alors, si l'entrée j est active, elle est prioritaire et émet les signaux qui correspondent ; si l'entrée j n'est pas active, alors l'émetteur recherche une autre entrée ;
- un émetteur de rang i (TXi), lorsqu'il détecte que l'entrée associée à son bloc de trame (entrée i) est inactive (rien à émettre) compte le nombre d'entrées de rang inférieur à i, qui sont aussi inactives. Soit P ce nombre. Alors l'émetteur i, à partir de l'entrée 1, recherche la (P + 1)ème entrée qui nécessite une émission renforcée. Si elle existe, il émet les signaux correspondants.

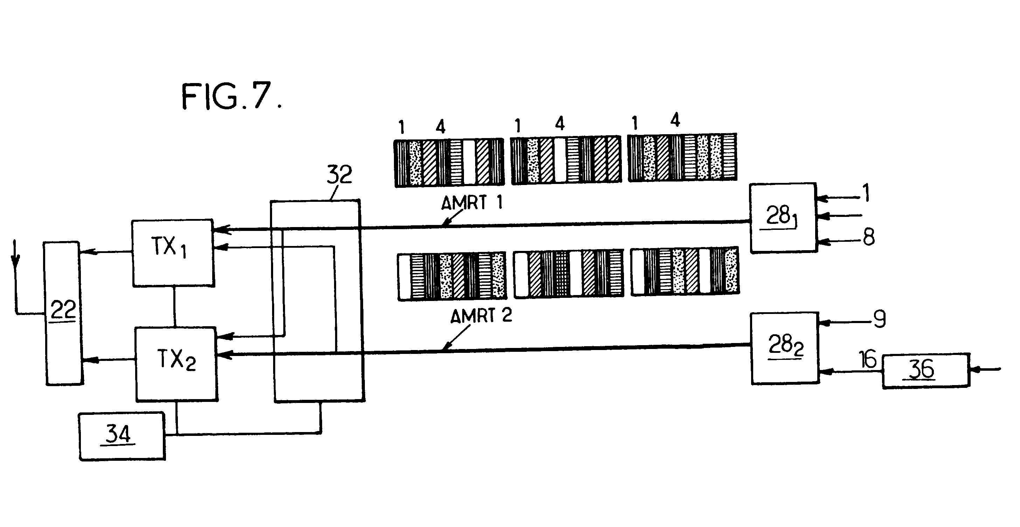

L'exemple illustré en figure 7 permettra de mieux comprendre la mise en oeuvre de l'invention dans le cas particulièrement simple de deux canaux de transmission AMRT, chacun prévu pour un multiplex de huit communications, sans diversité d'émission.

Les références portées sur la figure 7 sont les mêmes que sur les figures précédentes.

Dans le cas particulier d'un système GSM, chaque communication parvient au bloc de gestion de trame 28₁ ou 28₂ par une chaîne de mise en forme 36 à partir du signal binaire d'origine. Cette chaîne effectue un codage par blocs et convolutionnel à correction d'erreurs, un entrelacement temporel et éventuellement un chiffrage.

Chaque émetteur TX1 ou TX2 comporte en entrée un modulateur à saut de fréquence et il est prévu pour émettre sur des fréquences modifiées cycliquement et sélectionnées de façon que des créneaux simultanés correspondant à des communications différentes soient toujours émis à des fréquences différentes, mais appartenant toutes à un même catalogue de fréquence. Chaque créneau a une durée de 577 µs et chaque trame multiplex a une durée de 4,617 ms. Si on suppose que les trames provenant des blocs 28₁ et 28₂ de la figure 7 sont celles montrées en AMRT1 et AMRT3 sur la figure 6, le premier créneau temporel des trames fourni par le bloc 28₂ est réservé en permanence par le contrôleur 34 d'allocation de ressource, qui interdit toute communication provenant du bloc 28₂ pendant ces créneaux.

Le créneau d'ordre 1 pourrait d'ailleurs tout aussi bien être remplacé par un créneau d'ordre i quelconque.

Dans le cas illustré, le premier créneau de la trame AMRT3 peut alors être consacré à l'émission par TX2 d'une communication particulière pour laquelle l'émetteur "naturel" est TX1.

Pour cela le bloc de gestion de trame 28₁ doit être commandé pour que la communication à émettre de façon renforcée soit toujours affectée au premier créneau (ou au créneau d'ordre i) de chaque trame. Le contrôleur 34 doit également commander l'émetteur TX2 de façon que sa fréquence porteuse soit égale à celle sur laquelle fonctionne, pour le même créneau, l'émetteur TX1 et qu'il y ait fonctionnement en phase.

Dans le cas, qui n'est pas celui de la figure 7, d'une émission en diversité, un décalage temporel peut être prévu entre les deux émissions.

Il a essentiellement été question jusqu'à présent d'une architecture dans laquelle il y a une affectation qu'on peut qualifier de "naturelle" de chaque bloc de trame à un émetteur. L'invention serait également applicable à une architecture dans laquelle il n'y a pas une telle affectation naturelle, l'affectation s'effectuant, de manière statique ou dynamique, par l'intermédiaire d'un réseau de commutation. On sait que cette dernière architecture de base a été proposée pour des installations de radio-communication, dans le but d'éviter la nécessité d'émetteurs agiles en fréquence pour implémenter le saut de fréquence. L'invention peut également s'appliquer à ce cas, avec la seule sujétion que certains au moins des émetteurs doivent présenter alors une agilité en fréquence : on peut alors définir la station comme ayant plusieurs émetteurs et ayant des blocs de gestion de trame permettant d'appliquer des données provenant de sources différentes à des canaux de transmission auxquels sont affectés des créneaux temporels homologues de trames successives pour réaliser un multiplexage à répartition dans le temps, les fréquences d'émission étant, à un instant donné, différentes pour les différentes sources, le multiplexage étant réalisé par un réseau de commutation permettant d'associer chacune des sources à l'un quelconque de plusieurs émetteurs parmi les émetteurs de la station. La station comporte encore des moyens affectant les créneaux temporels inutilisés à l'augmentation de la puissance émise pour transmettre les données provenant d'une source qui est active.

## Revendications

1. Station de base d'installation de radio-communication ayant plusieurs émetteurs, dont certains au moins sont associés chacun à un bloc de gestion de trames appliquant des données provenant de sources différentes à des canaux de transmission auxquels sont affectés des créneaux temporels homologues de trames successives pour réaliser un multiplexage à répartition dans le temps, les fréquences d'émission étant, à un instant donné, différentes pour les différentes sources, caractérisée en ce qu'elle comporte des moyens (32₁, 32₂,... ) affectant les créneaux temporels inutilisés d'un ou plusieurs des émetteurs de la station, autres que celui qui est normalement associé à une source, à l'augmentation de la puissance émise pour transmettre les données provenant de cette source, lorsqu'elle est active.

2. Station de base d'installation de radio-communication ayant plusieurs émetteurs et un ou plusieurs blocs de gestion de trames appliquant des données provenant de sources différentes à des canaux de transmission auxquels sont affectés des créneaux temporels homologues de trames successives pour réaliser un multiplexage à répartition dans le temps, les fréquences d'émission étant, à un instant donné, différentes pour les différentes sources, caractérisée en ce qu'elle comporte des moyens (32₁, 32₂,...) pour affecter au moins certains des créneaux temporels émis par un émetteur déterminé (TX1, TX2, TX3, TX4) non nécessaires pour la communication à partir d'une source déterminée qui lui serait affectée si elle était active, à l'émission à partir d'une source qui alimente également un autre émetteur, à la même fréquence de porteuse que celle du dit autre émetteur.

3. Station selon la revendication 2, caractérisée en ce que la source à laquelle on affecte des créneaux temporels inutilisés est sélectionnée de façon aléatoire parmi les sources actives, sélectionnée pour correspondre à la station mobile qui le nécessite le plus, ou déterminée par un algorithme mémorisé dans la station de base et évitant l'émission des données en provenance de la source par plus de deux émetteurs, l'émetteur associé étant choisi parmi tous les émetteurs inactifs s'il n'y a qu'une antenne d'émission, ou de telle manière que les deux émetteurs soient couplés sur des antennes différentes, pour obtenir un effet de diversité d'émission.

4. Station de base selon la revendication 1 ou 2, caractérisée en ce que le multiplexage est réalisé par un réseau de commutation permettant d'associer chacune des sources à l'un quelconque de plusieurs émetteurs parmi les émetteurs de la station.

5. Station de base suivant l'une quelconque des revendications précédentes, comprenant au moins deux antennes, caractérisée en ce que certains au moins des émetteurs sont couplés, par l'intermédiaire d'un duplexeur (22), à au moins une antenne d'alimentation de récepteurs.

6. Station de base suivant la revendication 5, à 2ⁿ émetteurs et deux antennes, caractérisée en ce que 2ⁿ⁻¹ des émetteurs sont couplés à l'une des antennes (RX-TX) et les 2ⁿ⁻¹ autres émetteurs à l'autre antenne (RXd-TXd), chacune des antennes attaquant des récepteurs correspondant à toutes les voies de réception, afin d'assurer une réception en diversité d'espace ainsi que de permettre une émission en diversité d'espace.

7. Station de base suivant la revendication 6, comportant quatre émetteurs répartis en deux groupes attaquant chacun une antenne d'émission par l'intermédiaire d'un coupleur large bande.

8. Station de base suivant la revendication 5, caractérisée en ce qu'elle comporte un groupe de r émetteurs et un groupe de s émetteurs attaquant chacun une antenne, l'une des antennes étant reliée à tous les récepteurs normaux et l'autre antenne à tous les récepteurs de diversité, r étant égal ou différent de s.

9. Station de base selon l'une quelconque des revendications 1 à 5, comprenant au moins deux antennes, caractérisée en ce que les créneaux temporels à transmettre sont appliqués à la fois à un émetteur normal et à un émetteur de diversité attaquant des antennes différentes.

10. Station de base suivant l'une quelconque des revendications 5 à 9, caractérisée en ce que les antennes sont placées à une distance suffisante l'une de l'autre pour être spatialement décorrélées.

11. Station de base selon la revendication 10, caractérisée en ce que l'émission sur deux antennes décorrélées est effectuée avec un décalage temporel.

## Patentansprüche

1. Basisstation einer Radiokommunikationseinrichtung mit mehreren Sendern, von denen wenigstens bestimmte jeweils mit einem Block einer Rasterverwaltung verbunden sind, welche auf Daten angewendet werden, die aus verschiedenen Quellen mit Übertragungskanälen hervorkommen, welche auf zeitlich homologe Öffnungen von aufeinanderfolgenden Rastern einwirken, um eine vielfältige Verteilung in der Zeit zu verwirklichen, wobei die Sendefrequenzen für einen gegebenen Zeitpunkt für die verschiedenen Quellen unterschiedlich sind,
dadurch gekennzeichnet,
daß sie Mittel (32₁, 32₂, ...) aufweist, die die zeit-lich ungebrauchten Öffnungen einer oder mehrerer der Sender der Station, wobei es sich um eine andere handelt als diejenige, die normalerweise mit einer Quelle verbunden ist, mit einer Erhöhung der Sendekraft beaufschlagen, um die aus dieser Quelle hervorkommenden Daten zu übertragen, während die Quelle aktiv ist.

2. Basisstation einer Radiokommunikationseinheit mit mehreren Sendern und einem Block oder mehreren Blöcken einer Rasterverwaltung, welche auf Daten angewendet werden, die aus verschiedenen Quellen mit Übertragungskanälen hervorkommen, welche auf zeitlich homologe Öffnungen von aufeinanderfolgenden Rastern einwirken, um eine Vervielfältigung der Verteilung in der Zeit zu verwirklichen, wobei die Sendefrequenzen für einen gegebenen Zeitpunkt für verschiedene Quellen unterschiedlich sind,
dadurch gekennzeichnet,
daß sie Mittel (32₁, 32₂, ...) aufweist, um wenigstens bestimmte der zeitlichen Öffnungen, welche von einem bestimmten Sender (TX1, TX2, TX3, TX4) gesendet werden und nicht notwendig sind für die Kommunikation von einer bestimmten Quelle, die beaufschlagt würde, wenn sie aktiv wäre, mit einer Emission zu beaufschlagen, ausgehend von einer Quelle, die gleichermaßen einen anderen Sender speist, mit derselben Trägerfrequenz wie diejenige des besagten anderen Senders.

3. Station nach Anspruch 2,
dadurch gekennzeichnet,
daß die Quelle, auf welche man die zeitlich ungebrauchten Öffnungen anwendet, zufällig unter den aktiven Quellen ausgewählt wird, und zwar derart, um mit der beweglichen Station, die diese am meisten benötigt, übereinzustimmen, oder durch einen Algorithmus bestimmt wird, der in der Basisstation gespeichert ist und das Senden von Daten durch das Hervortreten aus der Quelle durch mehr als zwei Sender vermeidet, wobei der verbundene Sender unter allen inaktiven Sendern ausgewählt wird, wenn es nur eine Sendeantenne gibt, oder auf solche Weise, daß zwei Sender auf verschiedenen Antennen gekoppelt werden, um einen Effekt einer Sendevielfalt zu erreichen.

4. Basisstation nach Anspruch 1 oder 2,
dadurch gekennzeichnet,
daß die Vielfalt durch ein Kommunikationsnetz erreicht wird, das es erlaubt, jede der Quellen mit irgendeinem der mehreren Sender unter den Sendern der Station zu verbinden.

5. Basisstation nach irgendeinem der vorangehenden Ansprüche mit wenigstens zwei Antennen,
dadurch gekennzeichnet,
daß wenigstens bestimmte der Sender durch Zwischenschaltung eines Duplexers (22) mit wenigstens einer Speiseantenne eines Empfängers gekoppelt sind.

6. Basisstation nach Anspruch 5 mit 2ⁿ Sendern und zwei Antennen,
dadurch gekennzeichnet,
daß 2ⁿ⁻¹ Sender mit einer der Antennen (RX-TX) gekoppelt sind und daß die 2ⁿ⁻¹ anderen Sender mit der anderen Antenne (RXd-TXd) gekoppelt sind, wobei jede Antenne auf die entsprechenden Empfänger auf allen Empfangsbahnen einwirkt, um einen Empfang in räumlicher Vielfalt sicherzustellen sowie eine Sendung in räumlicher Vielfalt zu erlauben.

7. Basisstation nach Anspruch 6 mit vier Sendern, die in zwei Gruppen aufgeteilt sind und jeweils eine Sendeantenne durch Zwischenschaltung eines Breitbandkupplers beaufschlagen.

8. Basisstation nach Anspruch 5,
dadurch gekennzeichnet,
daß sie eine Gruppe von r Sendern und eine Gruppe von s Sendern aufweist, die jeweils eine Antenne beaufschlagen, wobei eine der Antennen mit allen normalen Empfängern verbunden ist und die andere Antenne mit allen Empfängern mit Vielfalt verbunden ist, wobei r gleich oder ungleich s ist.

9. Basisstation nach irgendeinem der Ansprüche 1 bis 5, mit wenigstens zwei Antennen,
dadurch gekennzeichnet,
daß die zeitlichen Öffnungen, die zu übertragen sind, zugleich auf einen normalen Sender und einen Sender mit Vielfalt angewendet werden, welche verschiedene Antennen beaufschlagen.

10. Basisstation nach irgendeinem der Ansprüche 5 bis 9,
dadurch gekennzeichnet,
daß die Antennen gegenseitig in einem ausreichenden Abstand voneinander angeordnet sind, um eine räumliche Entkopplung zu gewährleisten.

11. Basisstation nach Anspruch 10,
dadurch gekennzeichnet,
daß die Sendung auf zwei entkoppelten Antennen mit einer zeitlichen Verschiebung bewirkt wird.

## Claims

1. Base station for a radio communication installation, having several transmitters, at least some of which are each connected to a frame management unit applying data emanating from different sources to transmission channels to which identical time slots of successive frames are allocated to produce time-division multiplexing, the transmission frequencies at a given instant being different for the different sources, **characterised in that** it contains means (32₁, 32₂,...) allocating the unused time slots of one or more of the station transmitters, other than the one which is normally connected to a source, for the increase in the radiated power for transmitting the data emanating from this source when it is active.

2. Base station for a radio communication installation, having several transmitters and one or more frame management units applying data emanating from different sources to transmission channels to which identical time slots of successive frames are allocated to produce time-division multiplexing, the transmission frequencies at a given instant being different for the different sources, **characterised in that** it contains means (32₁, 32₂,...) to allocate at least some of the time slots transmitted by a specific transmitter (TX1, TX2, TX3, TX4), not required for communication from one specific source which will be allocated to it if it was active, to the transmission from one source which also feeds another transmitter, at the same carrier frequency as that of said other transmitter.

3. Base station according to Claim 2, **characterised in that** the source to which unused time slots are allocated is selected randomly from active sources and selected in order to correspond to the mobile station which has a greater requirement for it, or determined by an algorithm stored in the base station and preventing the transmission by more than two transmitters of data emanating from the source, the associated transmitter being selected from all the inactive transmitters if there is only one transmitting antenna, or in such a way that the two transmitters are coupled to different antennas in order to obtain a diversity transmission effect.

4. Base station according to Claim 1 or 2, **characterised in that** multiplexing is achieved by a switching network enabling each of the sources to be connected to any one of several of the station transmitters.

5. Base station according to any one of the preceding claims containing at least two antennas, **characterised in that** at least some of the transmitters are coupled via a duplexer (22) to at least one antenna for supplying the receivers.

6. Base station according to Claim 5, with 2ⁿ transmitters and two antennas, **characterised in that** 2ⁿ⁻¹ of the transmitters are coupled to one of the antennas (RX-TX) and the other 2ⁿ⁻¹ transmitters to the other antenna (RXd-TXd), each of the antennas activating receivers corresponding to all the receiving channels, in order to provide space diversity reception and to permit space diversity transmission.

7. Base station according to Claim 6, containing four transmitters divided into two groups, each activating a transmitting antenna via a wide-band coupler.

8. Base station according to Claim 5, **characterised in that** it contains a group of r transmitters and a group of s transmitters, each activating one antenna, one of the antennas being connected to all the normal receivers and the other antenna to all the diversity receivers, r being equal to or different from s.

9. Base station according to any one of Claims 1 to 5, containing at least two antennas, **characterised in that** the time slots to be transmitted are applied at the same time to one normal transmitter and to one diversity transmitter activating different antennas.

10. Base station according to any one of Claims 5 to 9, **characterised in that** the antennas are placed at a distance from each other which is sufficient for one to be spatially decorrelated from the other.

11. Base station according to Claim 10, **characterised in that** transmission via two decorrelated antennas is effected by means of a time displacement.
